# EUROPEAN PATENT SPECIFICATION

(11) **EP 0 568 886 B1**
(45) Date of publication and mention of the grant of the patent: **10.06.1998**
(21) Application number: 93106691.4
(22) Date of filing: 24.04.1993
(51) Int. Cl.: G01S 1/48, H01Q 3/40

(54) **Circuit and phase shifters for generating signals for TACAN antennas**
Schaltungsanordnung und Phasenschieber zur Signalerzeugung für TACAN-Antennen
Circuit et déphaseurs pour produire des signaux pour antennes TACAN

(30) Priority: 05.05.1992 IT MI921075
(43) Date of publication of application: 10.11.1993
(73) Proprietor: ALCATEL ALSTHOM COMPAGNIE GENERALE D'ELECTRICITE, 75008 Paris (FR)
(72) Inventor: Bertocchi, Giuseppe, Bergamo (IT); Mauri, Paolo, Gallarate (VA) (IT)
(74) Representative: Pohl, Herbert, Dipl.-Ing.

(56) References cited:
- GB-A- 2 158 649
- US-A- 3 747 102
- US-A- 4 905 012
- 19 TH EUROPEAN MICROWAVE CONFERENCE September 1989, LONDON , GB pages 959 - 965 FOTI ET AL 'An intelligent electronically spinning TACAN antenna'
- AP-S INTERNATIONAL SYMPOSIUM ON ANTENNAS AND PROPAGATION June 1985, VANCOUVER, CANADA, pages 115 - 119, GREVING ET AL 'An optimized circular array-application to the TACAN system'
- MICROWAVES & RF May 1989, pages 194 - 203 MACNAMARA ET AL 'Stripline network drives 32 elements to wide bandwidths'

## Description

The present invention relates to a circuit for generating RF signals for electronically scanned antennas and in particular for TACAN systems as set forth in the preamble of the main claim, and to a phase shifter specially suitable for such circuit.

In the field of NAVAID equipments, electronically scanned antennas have been using for some time in place of mobile antennas now obsolete. The scanning effect of the RF signal is obtained through use of a plurality of radiating elements to which RF signals are fed that differ each other on the ground of reciprocal phase and of amplitude and whose phase varies continuously with time; in particular in TACAN systems such RF signals are amplitude modulated and the phase of the modulating signals varies according to a prefixed scheme.

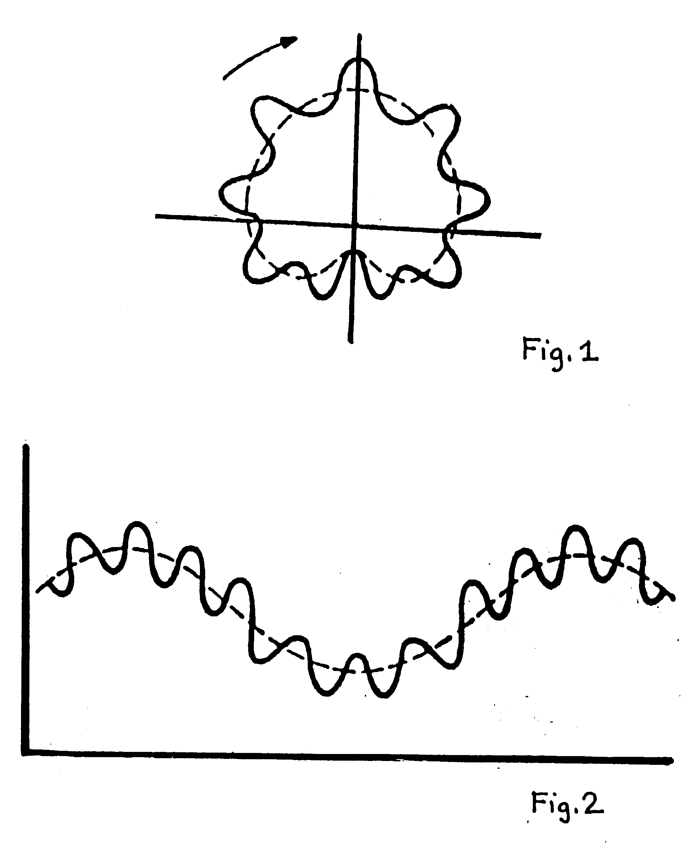

In fig. 1 there is illustrated the radiation pattern of a TACAN-antenna which rotates about its axis at fifteen revolutions per second; in order to obtain such an effect the radiating elements have to generate suitable RF signals. In fig. 2 there is represented the manner in which the amplitude of the signal received by a fixed receiver located within the range of the TACAN-antenna changes with time.

Solutions of the problem of providing a circuit capable of generating RF signals with the necessary characteristics are known in the art for some time. Such circuits are based upon the use of the so-called butler-matrixes.

One of such circuits is illustrated in the articles of G. Greving, R. Zeitz "An Optimized Circular Array-Application to the TACAN System" from AP-S International Symposium on "ANTENNAS AND PROPAGATION" Vancouver, Canada, June 17-21, 1985.

The circuit illustrated in this article is basically constituted by a power divider at the input of which there is fed a sole RF signal generated by the TACAN equipment and which provides each of its four outputs with the same signal but having a power equal to one fourth of the input power. Three of the outputs of such power divider are fed at the input of three electronically controlled phase shifters.

The remaining output of the power divider (the one corresponding to the carrier of the signal to be emitted) and the outputs of the three phase shifters are then provided through six-input RF switches of a 6x16 Butler-matrix. The outputs of the Butler-matrix are applied to sixteen radiating elements of the TACAN systems antenna.

As suggested by the article itself, such a Butler-matrix can be realized by using known techniques or it can be acquired on the market from high frequency device vendors.

One of such Butler-matrixes commercially available (realized by ERA Technology Ltd ) and their conventional architecture are illustrated in the article "Stripline Network Drives 32 Elements to Wide Bandwidths" by T. M. Macnamara, R. Cahill, S.J. Foti in Microwaves & RF, May 1989.

The Butler-matrix therein illustrated is a 32x32 one and it is based on a tree regular architecture composed of 90-degree and 180-degree hybrid matrices and of fixed phase shifters, in particular Shiffman-frequency compensated differential phase shifters. Moreover there is illustrated the possibility of simplifying the matrix structure in those cases when a particular application does not require all the inputs but, e.g., only eight.

The Butler-matrix described therein is also the subject of US-Patent No. 4 905 012.

Such big Butler-matrixes are expensive, difficult to implement and introduce remarkable errors as to both insertion loss and the SWR (Standing-Wave Ratio) resulting at the inputs of the radiating elements; in particular the latter is worsened by the frequency-compensated differential phase-shifters.

It is an object of the present invention to provide a circuit capable of generating RF signals with the characteristics necessary for the electronically scanned antennas which overcomes the drawbacks of the prior art and, more specifically, is more simple and that introduces less relevant errors.

This object is reached through the circuit for generating RF signals in an electronically scanned antenna, and in particular to be applied to a TACAN system antenna, as set forth in claim 1.

Further advantageous aspects of the present invention are set forth in the subclaims.

By using a small Butler-matrix to combine a limited number of outputs of a power divider and by further combining the remaining outputs of the power divider, suitably phase-shifted, and the few outputs of the Butler-matrix through the use of electromagnetic combiners,a plurality of RF signals suitable for electronically scanned antennas is obtained with a remarkable precision and a relatively simple circuitry.

An improvement in the SWR is obtained by using phase shifters compensated through lambda/4 stubs instead of conventional differential phase shifters frequency-compensated through elctromagnetic coupling (Schiffman phase shifters), as it will become clearer hereinafter.

Such type of phase shifter has a remarkable shift constancy within an elevated band centered on the operating frequency of the phase shifter.

The present invention will be more apparent from the following description taken in conjunction with the attached drawings in which:
- Fig. 1 shows the radiation pattern of a TACAN-antenna,
- Fig. 2 shows the manner in which the amplitude of the signal received by a fixed receiver located within the range of the TACAN-antenna changes with time,
- Fig. 3 shows a conceptual block diagram of the circuit according to the present invention connected with the radiating elements of an electronically scanned antenna,
- Figs. 4a and 4b show a block diagram of an embodiment of the circuit according to the present invention subdivided in two sections and connected with the radiating elements of an electronically scanned antenna of a TACAN system,
- Fig. 5 shows a schematic structure of the phase shifter according to the present invention,
- Fig. 6 shows a physical structure of an embodiment of a pair of phase shifters according to the present invention integrated together two electromagnetic combiners, and
- Fig. 7 shows a physical structure resulting from the integration of a conventional phase shifter and an electromagnetic combiner, which can be advantageously used in the circuit according to the present invention.

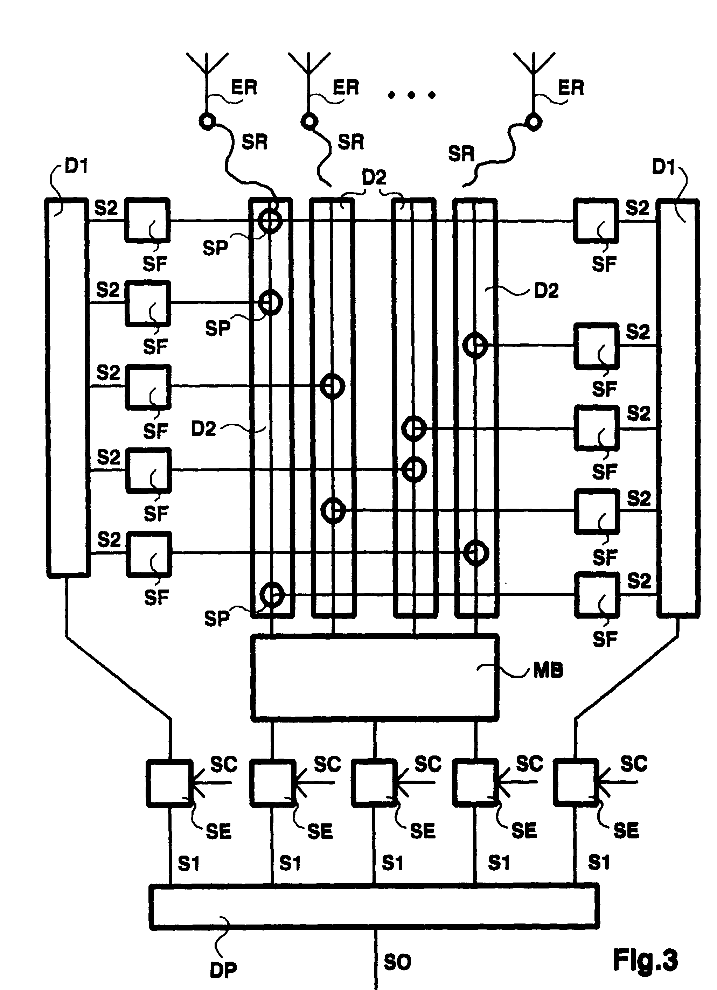

In fig. 3 there is illustrated a conceptual block diagram of the circuit according to the present invention. An oscillating signal SO is applied to the input of a first power divider DP which generates at its outputs a plurality of electrical signals S1. Each a the electrical signals S1 has a well precise power ratio with the oscillating signal SO. Disposed at the outputs of the power divider DP are a plurality of electronically controlled phase shifters SE respectively connected with such outputs. They are designed to produce respective time-varying phase shifts on the plurality of electrical signals S1 in relation to respective control signals SC that each phase shifter SE receives at its input. Such phase shifters realize the scanning effect. A limited number of phase shifters SE is connected with the inputs of a Butler-matrix MB having a limited number of outputs with respect to the number of radiating elements of a common electronically scanned antenna.

As the complexity number of Butler-matrix depends on the number of inputs and outputs, it is clear that by limiting their number the complexity and also the errors introduced by the matrix is reduced. In general one operates with a number of inputs ranging from 4 to 8 and with a number of outputs ranging from 16 to 36. Therefore, for a limited number it is intended 3 or 4 inputs and 8 outputs at the most or, still better, 4 in such a way that the Butler-matrix has two level structure.

Disposed at the outputs of those phase shifters SE not connected with the Butler-matrix MB respectively are a plurality of power dividers D1. They generate respective pluralities of electrical signals S2 each having a well precise power ratio with respective inputs. Placed at the output of the plurality of power dividers D1 are a plurality of fixed phase shifters SF, each having a well precise phase shift.

To summarize, the circuits comprises a number of (electrical or electromagnetical) power adders SP equal to the number of radiating elements ER of an electronically scanned antenna to which the circuit is connected. They receive at the input one of the outputs of the Butler-matrix MB and a limited number (1,2,3...) of outputs of the fixed phase shifters SF, and generate a radio-frequency sum signal SR to be sent to the radiating elements ER.

In order to obtain better features it is convenient to place at the outputs of the Butler-matrix MB a further plurality of power dividers D2, each connected to one output, and then connect their outputs to the power adders SP according to the application. Naturally, depending on the applications, it is necessary to fix the number of outputs of each power divider D2 and the power ratio between the individual outputs and the relative input.

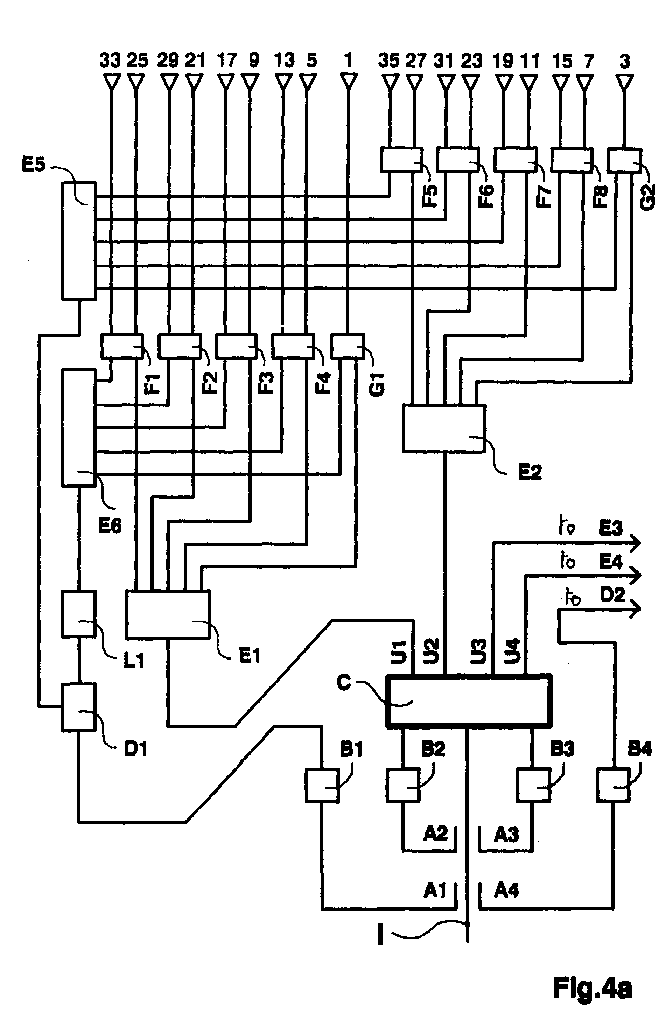

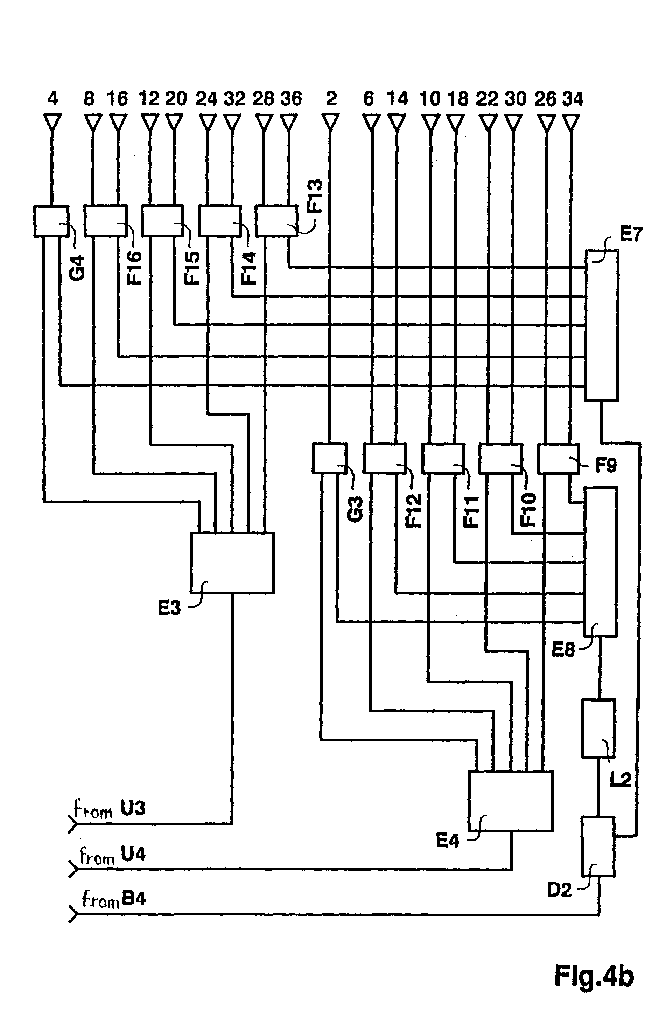

Figs. 4a and 4b show a block diagram of an embodiment of the circuit according to the present invention subdivided in two sections and connected with the radiating elements of an electronically scanned antenna of a TACAN System.

The input I of the oscillating signal, corresponding to the carrier is applied to a power divider consisting of four electromagnetic couplers A1 to A4 which couple directly with the input I. The power ratio is determined by the coupling level of the individual couplers A.

Signals picked up from four couplers A1, A2, A3, A4 are fed to the input of four phase shifters B1, B2, B3, B4 respectively.

The outputs connected with phase shifter B1 and B4 are those relative to 15 Hz modulation signals, first and second sideband, while outputs B2 and B3 are those relative to 135 Hz modulation signals, first and second sideband respectively. The levels of signals from couplers A1 to A4 establish the modulation index.

The four phase shifter B1 to B4 are electronically controlled and apply suitable phase shifts to four signals picked up from couplers A1 to A4 thus obtaining the effect that the radiation pattern rotates fifteen revolutions on itself. Such phase shifters generally consist in switched-line phase shifters whose switching is operated PIN diodes controlled by digital signals, e.g. four bits, coming from a control unit which is not part of the invention.

Signals relative to the carrier, input I, and to the two 135 Hz sidebands, at the output of phase shifters B2 and B3, are provided at the inputs of a 3x4 Butler-matrix C, more precisely with input phase modes -1, 0, +1.

The two signals at the output of phase shifters B1 and B4, relative to the first and second 15 Hz sidebands, are parallelly sent respectively to two power dividers D1 and D2 whose function is to divide the input power into two equal parts; they are simply realized with electrically connected microstrip structures.

Both the output signals from the power dividers D1 and D2, relative to the first and second 15 Hz sidebands and the signals from the output of the Butler-matrix C, relative to the carrier with the suitably overlapped 135 Hz modulation, are divided by nine and, suitably combined, are fed to four groups of nine radiating elements, in the way which will become clearer in the following.

The outputs of divider D1, which represent the first 15 Hz sideband, through shifter L1, two dividers E5 and E6, blocks F1 to F8 and blocks G1 and G2, are distributed with the same amplitude over the eighteen odd outputs, but with a progressive increasing phase of 20 degrees to generate the phase mode + 1 necessary for the 15 Hz modulation.

In a similar way the outputs of divider D2, which represent the second 15 Hz sideband, through phase shifter L2, two dividers E7 and E8, blocks F9 to F16, and blocks G3 and G4, are distributed with the same amplitude over the nine outputs of the circuit subject of the present invention designed by 1, 5, 9, 13, 17, 21, 25, 29, 33.

Similarly outputs U1, U2, U3, U4 of the Butler-matrix C are fed to groups of nine outputs with incremental index stepped up by four.

Dividers E1 to E8 are divide-by-five power dividers unbalanced with outputs in the ratios 2/9, 2/9, 2/9, 2/9, 1/9; obviously outputs having ratio equal to 2/9 are connected with type F blocks while outputs having ratio 1/9 are connected with type G blocks.

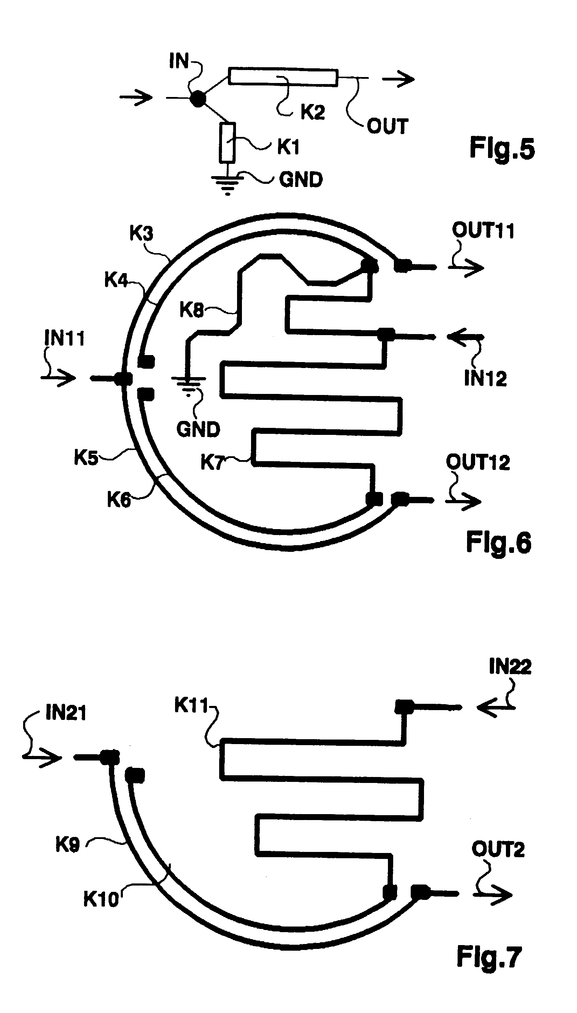

In fig. 5 there is illustrated a schematic structure of a phase shifter according to the present invention suitable for the above-mentioned objects.

A microstrip structure K2 is responsible for the pre-selected phase shift at a specified frequency (central frequency of operation band of the phase shifter itself); one of the ends is connected with an output OUT, the other one is connected to an input IN and to another microstrip structure K1, the other end of structure K1 is connected to ground GND. Structure K2 has a phase shift increasing with frequency and therefore is not as constant as one would like; structure K1, on the contrary, has a phase shift decreasing with frequency, since one of its ends is connected to ground; the overall effect is to compensate the two effects. If the branch K1 is then tuned on a fourth of the wavelength corresponding to the specified frequency, the compensation is still better.

Shapes and dimensions of the two structures K1 and K2 are extremely variable, depend on the particular application and must be chosen on the ground of laboratory experiments.

In fig. 6 there is illustrated a physical structure of an embodiment of a pair of phase shifters operating in accord with the principle of the phase shifter of fig. 5, integrated together with two electromagnetic combiners; such a structure is advantageously used for realizing type F blocks; the whole structure is realized through arcs and branches of microstrip.
The structure has two inputs IN11 and IN12, and two outputs OUT11 and OUT12; it is formed by two circumferential arcs K3 and K5 connected together at one end with input IN 11 and, at respective other ends, with outputs OUT11 and OUT 12; disposed between last said ends is a microstrip structure K7 in the form of a squareware not electrically connected with the two arcs K3 and K5, at the ends of structure K7 two further circumferential arcs K4 and K5 start parallelly to arcs K3 and K5 respectively, and creating therefore two electromagnetic couplings with consequent power summation.

Structure K7 has a tap connected with input IN12; the two squarewave sections so individuated act as phase shifters and the amount of the phase shift depends naturally on the exact shape and dimension of the microstrip and on choice of the tap. Then, in order to improve the frequency compensation, there is provided a further microstrip structure K8 electrically connected, at one end, with arc K4 and with structure K7 in the area of output OUT11, and at the other end is grounded. The form and dimension of such structure are obtained on the ground of experiments trying to obtain phase shift constancy in the operating band of the phase shifter. Naturally innumerable variations could result from experiments but still based upon the same principle.

In fig. 7 there is shown a physical structure, resulting from the integration of a conventional phase shifter with an electromagnetic combiner, which can be advantageuously used in the circuit according to the present invention, in particular to realize type-G blocks.

As can be seen from the figure it corresponds to a portion of the structure shown in fig. 6. It represents two inputs IN21 and IN22 and one output OUT2; input IN21 is connected to one end of a circumferential arc K9, the other end of arc K9 is connected to output OUT2; disposed in parallel with circumferential arc is a further circumferential arc K10 electromagnetically coupled therewith.

Connected with the end of arc K10 at the output OUT2, is a structure K11 shaped as a squareware; input IN22 is connected with the other end of structure K11.

If the frequence compensation entrusted to the conventional phase shifter is not sufficient, it is possible, of course, to add a further microstrip structure like K11 of fig. 5.

## Claims

1. Circuit for generating RF signals in an electronically scanned antenna and in particular to be applied to a TACAN system antenna, said antenna being composed of a plurality of independent radiating elements (ER) , and said circuit receiving at the input an oscillating signal (SO) and generating a number of RF signals equal to the number of said radiating elements, which differ from each other on the ground of the reciprocal phase and of the amplitude, said circuit including:
- a first power divider (DP) receiving at the input said oscillating signal and capable of generating at the outputs a plurality of electrical signals (S1) each having a well precise power ratio with said oscillating signal;
- a plurality of electronically controlled phase shifters (SE) connected to the outputs of said first power divider and capable of producing respective time-varying phase shifts on said plurality of electrical signals in relation to respective control signals (SC);
- a Butler-matrix (MB) having inputs connected to the outputs of a limited number of said electronically controlled phase shifters (SE);
- a plurality of power dividers (D1) respectively connected to outputs of the first power divider and designed to generate at the outputs respective pluralities of electrical signals (S2) each having a well precise power ratio with respective inputs;
- a plurality of fixed phase shifters (SF) respectively connected to the outputs of said plurality of power dividers (D1) and
- a number of power adders (SP) equal to the number of said radiating elements (ER), having the inputs connected to at least one of the outputs of said Butler-matrix and to the outputs of said fixed phase shifters (SF), and having the output connected to one of said radiating elements,
**characterized in that**
- the Butler - matrix has a reduced number of outputs with respect to said number of radiating elements and that
- the power dividers (D1) are respectively connected to those outputs of the electronically controlled phase shifters which are not already connected to said Butler-matrix.

2. Circuit according to claim 1, characterized in that it further comprises an additional plurality of power dividers (D2), each connected with an output of said Butler-matrix, in that said power adders (SP) are connected to the outputs of said additional plurality of power dividers (D2), and in that at least one of the inputs of said Butler-matrix is directly connected with an output of said first power divider (DP).

3. Circuit according to claim 1, characterized in that said electronically controlled phase shifters (SE) are constituted by switched-line phase shifters whose switching is operated by PIN diodes controlled by said control signals (SC).

4. Circuit according to claim 1, characterized in that said Butler-matrix (MB) is a two-level one.

5. Circuit accordig to claim 1, characterized in that each of said plurality of power dividers (D1) consists of electrically connected microstrip structures.

6. Circuit according to claim 1, characterized in that said power adders (SP) have the output electrically connected to the input provided for the connection with one of the outputs of said Butler-matrix (MB), and the inputs provided for the connection to said fixed phase shifters (SF) are directly coupled with said electrical connection with microstrip structures.

7. Circuit according to claim 6, characterized in that pairs of said power adders, providing RF signals to pairs of said radiating elements, and pairs of said fixed phase shifters, corresponding to suitable phase shifts, are realized together with the same microstrip structure.

8. Circuit according to claim 1, characterized in that said phase shifters comprise microstrip structures having at least two branches, said branches being connected together, at one end, to the input of the respective phase shifter, one of said branches being connected, at the other end, to the output of said phase shifter and being responsible for the phase shift of said phase shifter at a pre-established frequency, and the other branch being connected, at the other end, to ground and dimensioned and shaped in such a way as to compensate errors due to the band of signals applied to such phase shifter.

9. Circuit according to claim 8, characterized in that said grounded branch has a length equal to a quarter of the wavelength corresponding to said pre-established frequency.

## Patentansprüche

1. Schaltung zur Erzeugung von Hochfrequenzsignalen in einer elektronisch abgetasteten Antenne, die insbesondere an eine Antenne eines TACAN-Systems angelegt werden sollen, wobei die Antenne aus einer Vielzahl von unabhängigen Strahlungselementen (ER) besteht und die Schaltung am Eingang ein Schwingungssignal (SO) empfängt und eine Anzahl von Hochfrequenzsignalen, die gleich der Anzahl der Strahlungselemente ist, erzeugt, die sich auf Grund der entgegengesetzten Phase und der Amplitude voneinander unterscheiden, wobei die Schaltung folgendes enthält:
- einen ersten Leistungsteiler (DP), der das Schwingungssignal am Eingang empfängt und in der Lage ist, an den Ausgängen eine Vielzahl von elektrischen Signalen (S1) zu erzeugen, von denen jedes ein exaktes Leistungsverhältnis zu dem Schwingungssignal hat;
- eine Vielzahl von elektronisch gesteuerten Phasenschiebern (SE), die mit den Ausgängen des ersten Leistungsteilers verbunden und in der Lage sind, entsprechende, sich zeitlich ändernde Phasenverschiebungen auf der Vielzahl der elektrischen Signale in bezug auf entsprechende Steuersignale (SC) zu erzeugen;
- eine Butler-Matrix (MB), deren Eingänge mit den Ausgängen einer begrenzten Anzahl der elektronisch gesteuerten Phasenschieber (SE) verbunden sind;
- eine Vielzahl von Leistungsteilern (D1), die jeweils mit den Ausgängen des ersten Leistungsteilers verbunden und dafür bestimmt sind, an den Ausgängen eine entsprechende Vielzahl von elektrischen Signalen (S2) zu erzeugen, von denen jedes ein exaktes Leistungsverhältnis zu entsprechenden Eingangssignalen hat;
- eine Vielzahl von festen Phasenschiebern (SF), die jeweils mit den Ausgängen der Vielzahl von Leistungsteilern (D1) verbunden sind, und
- eine Anzahl von Leistungsaddierern (SP), die gleich der Anzahl der Strahlungselemente (ER) ist, deren Eingänge mit mindestens einem der Ausgänge der Butler-Matrix und mit den Ausgängen der festen Phasenschieber (SF) verbunden sind und deren Ausgang mit einem der Strahlungselemente verbunden ist,
**dadurch gekennzeichnet, daß**
- die Butler-Matrix eine geringere Anzahl von Ausgängen in bezug auf die Anzahl der Strahlungselemente hat und daß
- die Leistungsteiler (D1) jeweils mit denjenigen Ausgängen der elektronisch gesteuerten Phasenschieber verbunden sind, die nicht bereits mit der Butler-Matrix verbunden sind.

2. Schaltung nach Anspruch 1, dadurch gekennzeichnet, daß sie des weiteren eine zusätzliche Vielzahl von Leistungsteilern (D2) umfaßt, von denen jeder mit einem Ausgang der Butler-Matrix verbunden ist, dadurch, daß die Leistungsaddierer (SP) mit den Ausgängen der zusätzlichen Vielzahl von Leistungsteilern (D2) verbunden sind und dadurch, daß mindestens einer der Eingänge der Butler-Matrix direkt mit einem Ausgang des ersten Leistungsteilers (DP) verbunden ist.

3. Schaltung nach Anspruch 1, dadurch gekennzeichnet, daß die elektronisch gesteuerten Phasenschieber (SE) von Wählleitungs-Phasenschiebern gebildet werden, für deren Schaltvorgänge PIN-Dioden vorgesehen sind, die von den Steuersignalen (SC) gesteuert werden.

4. Schaltung nach Anspruch 1, dadurch gekennzeichnet, daß die Butler-Matrix (MB) eine Matrix mit zwei Ebenen ist.

5. Schaltung nach Anspruch 1, dadurch gekennzeichnet, daß jeder der Vielzahl der Leistungsteiler (D1) aus elektrisch verbundenen Mikrostreifenstrukturen besteht.

6. Schaltung nach Anspruch 1, dadurch gekennzeichnet, daß der Ausgang der Leistungsaddierer (SP) mit dem Eingang elektrisch verbunden ist, der für die Verbindung mit einem der Ausgänge der Butler-Matrix (MB) vorgesehen ist, und die Eingänge, die für die Verbindung mit den festen Phasenschiebern (SF) vorgesehen sind, über Mikrostreifenstrukturen direkt an die elektrische Verbindung angeschlossen sind.

7. Schaltung nach Anspruch 6, dadurch gekennzeichnet, daß Paare der Leistungsaddierer, die Paaren der Strahlungselemente Hochfrequenzsignale zuführen, und Paare der festen Phasenschieber, die geeigneten Phasenverschiebungen entsprechen, zusammen mit derselben Mikrostreifenstruktur realisiert sind.

8. Schaltung nach Anspruch 1, dadurch gekennzeichnet, daß die Phasenschieber Mikrostreifenstrukturen einschließen, die mindestens zwei Verzweigungen haben, wobei die Verzweigungen an einem Ende miteinander verbunden und an den Eingang des entsprechenden Phasenschiebers angeschlossen sind, wobei ei.ne der Verzweigungen am anderen Ende mit dem Ausgang des Phasenschiebers verbunden ist und für die Phasenverschiebung des Phasenschiebers mit einer vorher festgelegten Frequenz verantwortlich ist und die andere Verzweigung am anderen Ende auf Masse gelegt und so dimensioniert und geformt ist, daß sie Fehler, die auf das Band von Signalen, die an diesen Phasenschieber angelegt werden, zurückzuführen sind, ausgleicht.

9. Schaltung nach Anspruch 8, dadurch gekennzeichnet, daß die Länge der auf Masse gelegten Verzweigung gleich einem Viertel der Wellenlänge ist, die der vorher festgelegten Frequenz entspricht.

## Revendications

1. Circuit pour produire des signaux HF dans une antenne balayée électroniquement et destiné plus particulièrement à être appliqué à une antenne d'un système TACAN, ladite antenne étant constituée d'une pluralité d'éléments rayonnants indépendants (ER), et ledit circuit recevant à l'entrée un signal oscillant (SO) et produisant un certain nombre de signaux HF égal au nombre desdits éléments rayonnants, qui sont différents les uns des autres pour des raisons de phase réciproque et d'amplitude, ledit circuit comportant :
- un premier diviseur de puissance (DP) recevant à l'entrée ledit signal oscillant et capable de produire aux sorties une pluralité de signaux électriques (S1) ayant chacun un rapport de puissance bien précis avec ledit signal oscillant ;
- une pluralité de déphaseurs commandés électroniquement (SE) connectés aux sorties dudit premier diviseur de puissance et capable de produire des déphasages respectifs variant dans le temps sur ladite pluralité de signaux électriques en relation avec des signaux de commande respectifs (SC) ;
- une matrice de Butler (MB) ayant des entrées connectées aux sorties d'un nombre limité desdits déphaseurs commandés électroniquement (SE) ;
- une pluralité de diviseurs de puissance (D1) connectés respectivement aux sorties du premier diviseur de puissance et conçus pour produire aux sorties des pluralités respectives de signaux électriques (S2) ayant chacun un rapport de puissance bien précis avec les entrées respectives ;
- une pluralité de déphaseurs fixes (SF) connectés respectivement aux sorties de ladite pluralité de diviseurs de puissance (D1) et
- un certain nombre d'additionneurs de puissance (SP) égal au nombre desdits éléments rayonnants (ER), ayant les entrées connectées à au moins l'une des sorties de ladite matrice de Butler et aux sorties desdits déphaseurs fixes (SF), et ayant la sortie reliée à l'un desdits éléments rayonnants,
caractérisé en ce que
- la matrice de Butler a un nombre réduit de sorties par rapport audit nombre d'éléments rayonnants et en ce que
- les diviseurs de puissance (D1) sont connectés respectivement aux sorties des déphaseurs commandés électroniquement qui ne sont pas déjà reliées à ladite matrice de Butler.

2. Circuit selon la revendication 1, caractérisé en ce qu'il comprend en outre une pluralité additionnelle de diviseurs de puissance (D2), chacun étant connecté à une sortie de ladite matrice de Butler, en ce que lesdits additionneurs de puissance (SP) sont reliés aux sorties de ladite pluralité additionnelle de diviseurs de puissance (D2), et en ce qu'au moins l'une des entrées de ladite matrice de Butler est connectée directement à une sortie dudit premier diviseur de puissance (DP).

3. Circuit selon la revendication 1, caractérisé en ce lesdits déphaseurs commandés électroniquement (SE) sont constitués par des déphaseurs à ligne commutée dont la commutation est effectuée par des diodes PIN commandées par lesdits signaux de commande (SC).

4. Circuit selon la revendication 1, caractérisé en ce ladite matrice de Butler (MB) est une matrice à deux niveaux.

5. Circuit selon la revendication 1, caractérisé en ce que chacun de ladite pluralité de diviseurs de puissance (D1) est constitué de structures de microbandes commandée électriquement.

6. Circuit selon la revendication 1, caractérisé en ce que lesdits additionneurs de puissance (SP) ont la sortie reliée électriquement à l'entrée fournie pour la connexion avec l'une des sorties de ladite matrice de Butler (MB), et les entrées fournies pour la connexion auxdits déphaseurs fixes (SF) sont directement couplées à ladite connexion électrique avec des structures de microbandes.

7. Circuit selon la revendication 6, caractérisé en ce que des paires desdits additionneurs de puissance, fournissant des signaux HF à des paires desdits éléments rayonnants, et des paires desdits déphaseurs fixes, correspondant à des déphasages appropriés, sont réalisées ensemble avec la même structure de microbande.

8. Circuit selon la revendication 1, caractérisé en ce que lesdits déphaseurs comprennent des structures de microbandes ayant au moins deux branches, lesdites branches étant connectées ensemble, à une extrémité, à l'entrée du déphaseur respectif, l'une desdites branches étant reliée, à l'autre extrémité, à la sortie dudit déphaseur et étant responsable du déphasage dudit déphaseur à une fréquence pré-établie, et l'autre branche étant connectée, à l'autre extrémité, à la masse et étant dimensionnée et façonnée de façon à compenser les erreurs dues à la bande des signaux appliqués à un tel déphaseur.

9. Circuit selon la revendication 8, caractérisé en ce ladite branche mise à la masse a une longueur égale à un quart de la longueur d'onde correspondant à ladite fréquence pré-établie.
